Europäisches Patentamt

European Patent Office

Office européen des brevets

(19)

(11) Publication number: **0 260 819**
**B1**

## EUROPEAN PATENT SPECIFICATION

(12)

(45) Date of publication of the patent specification:
04.04.90

(51) Int. Cl.⁴: **B62L 1/12**

(21) Application number: 87307329.0

(22) Date of filing: 19.08.87

(54) Caliper brake.

(30) Priority: 20.08.86 JP 127475/86 U

(43) Date of publication of application:
23.03.88 Bulletin 88/12

(45) Publication of the grant of the patent:
04.04.90 Bulletin 90/14

(84) Designated Contracting States:
CH DE FR GB IT LI

(56) References cited:
FR-A- 794 069
FR-A- 849 229
GB-A- 698 136
US-A- 4 263 990
US-A- 4 301 894

(73) Proprietor: SHIMANO INDUSTRIAL COMPANY LIMITED,
77, 3-cho Oimatsu-cho Sakai-shi, Osaka(JP)

(72) Inventor: Nagano, Masashi, 74-19, Midorigaoka,
Izumi-shi Osaka(JP)

(74) Representative: Stokes, Graeme Wilson et al, c/o
Cruikshank & Fairweather 19 Royal Exchange Square,
Glasgow G1 3AE Scotland(GB)

## Description

The present invention relates to a caliper brake for a bicycle.

Generally, a caliper brake, as disclosed in United States Patent No. 4 301 894, has a set of caliper arms (carrying brake shoes) pivotally supported on a pivot shaft fixed to the bicycle frame. A caliper return spring arranged on the pivot shaft has spring legs acting on the caliper arms to bias the arms so that the brake shoes tend to move away from each other. When a brake operating lever is released, the caliper return spring returns each caliper arm, and the brake lever is returned simultaneously by a control wire connecting the caliper arms with the brake lever. On each spring leg, a slideable spacer member having stepped formations provides a means of individual adjustment of the spring legs relative to their caliper arms for the purpose of equalizing brake shoe-to-wheel rim clearances.

Hitherto, a cycle brake has been proposed which is provided with a brake lever return spring arranged to act directly on the brake lever. In the case where both caliper return and lever return springs are installed, the restoring forces of these return springs may be reduced so that even when the transmission efficiency of the control wire is impaired after long use, the brake lever action has a good return feeling while the entire braking action is exerted always in a light touch, thereby enabling a rider to steer the bicycle without anxiety. Thus, a caliper brake intended for operation by a spring-returned lever should have a relatively weak caliper return spring. However, such a relatively weak spring is not reliable in a caliper brake for use with a brake lever having no return spring since the relatively weak caliper return spring may eventually fail to return the brake lever through an impaired control wire transmission.

An object of the inventin is to provide a caliper brake having a caliper return spring which is simply adjustable for use either with a brake lever provided with a lever return spring or a brake lever having no lever return spring.

According to the present invention, there is provided a caliper brake for a bicycle, comprising a pivot shaft adapted for fixing to a bicycle frame, a caliper having a set of caliper arms mounted on the pivot shaft, and a caliper return spring having spring legs for urging the caliper arms to open the caliper, each spring leg acting on its associated caliper arm by way of a spacer member mounted on its spring leg by means of a bore in the spacer; wherein each spacer member has two mutually parallel contact faces disposed on opposite sides of the spacer, the bore extends parallel with the faces and nearer to one of said faces than the other, and the spacer is rotatable on the axis of the bore.

Each spacer member can be inverted through 180° around the bore, so that the spacer member can be changed between a first position where the first contact face contacts with the caliper arm and a second position where the second contact face contacts with the same.

Accordingly, the first and second contact faces are selected by the inversion of spacer member to change the position of ech spring leg of the return spring with respect to the caliper arm, thereby enabling the spring reaction force of the return spring for the caliper arm to be adjusted.

Embodiments of the present invention will now be described, by way of example, with reference to the accompanying drawings in which:

Fig. 1 is a rear view of an embodiment of a caliper brake of the invention;

Fig. 2 is a perspective sectional view to a larger scale of part of Fig. 1;

Fig. 3 is a sectional view to a larger scale on the line III-III in Fig. 1;

Fig. 4 corresponds with Fig. 1, but shows a spacer member inverted;

Fig. 5 corresponds with Fig. 2, but shows a spacer member inverted;

Fig. 6 is a perspective view of a spacer number only;

Fig. 7 is an enlarged plan view of a modified embodiment of a spacer member ;

Fig. 8 is a right-side view of the modified embodiment in Fig. 7;

Fig. 9 is a sectional view taken on the line IX-IX in Fig. 7; and

Fig. 10 is a sectional view taken on the line X-X in Fig. 8.

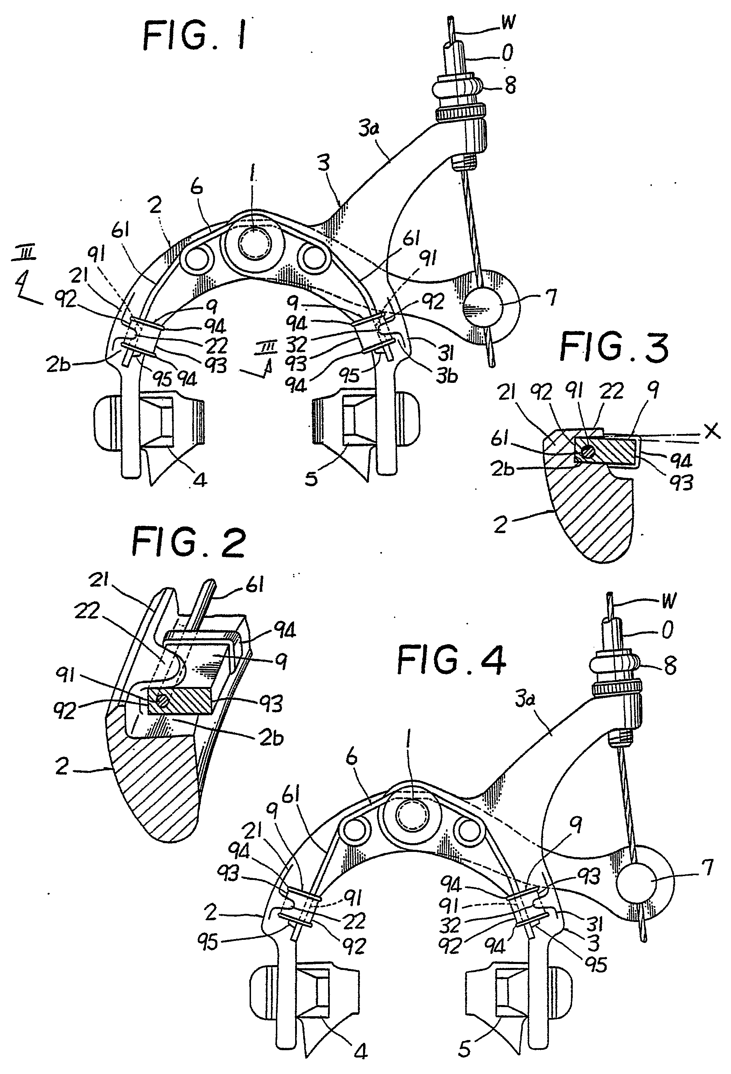

Referring to Fig. 1, a caliper brake is shown which pivotally supports a pair of caliper arms 2,3 having brake shoes 4 and 5. A pivot shaft 1 fixed to, for example, a front fork of a bicycle (not shown) is provided between the caliper arms 2 and 3 and carries a caliper return spring 6 for biasing the caliper arms 2 and 3 in the direction of moving the brake shoes 4 and 5 away from each other, that is to open the caliper. A fixture 7 for clamping one end of a control wire $\underline{W}$ is mounted on the free end of one caliper arm 2. A holder 8 for an outer sheath $\underline{O}$ for guiding the control wire $\underline{W}$ is mounted on an arm 3a provided at an intermediate portion of the other caliper arm 3. The fixture 7 and holder 8 are arranged opposite each other so that the wire $\underline{W}$ may be pulled to swing the caliper arms 2 and 3 against the restoring force of the caliper return spring 6 to thereby apply the brake.

In the embodiment shown in Figs. 1 through 6, a pair of spacer members 9 having bores 91 engageable with spring legs 61 of the caliper return spring 6 adjacent the caliper arms 2 and 3 are rotatably mounted on the spring legs 61 to be invertible around the respective spring legs 61. The caliper arms 2 and 3 are provided with respective abutments 21 and 31 for engagement by the spacer numbers 9.

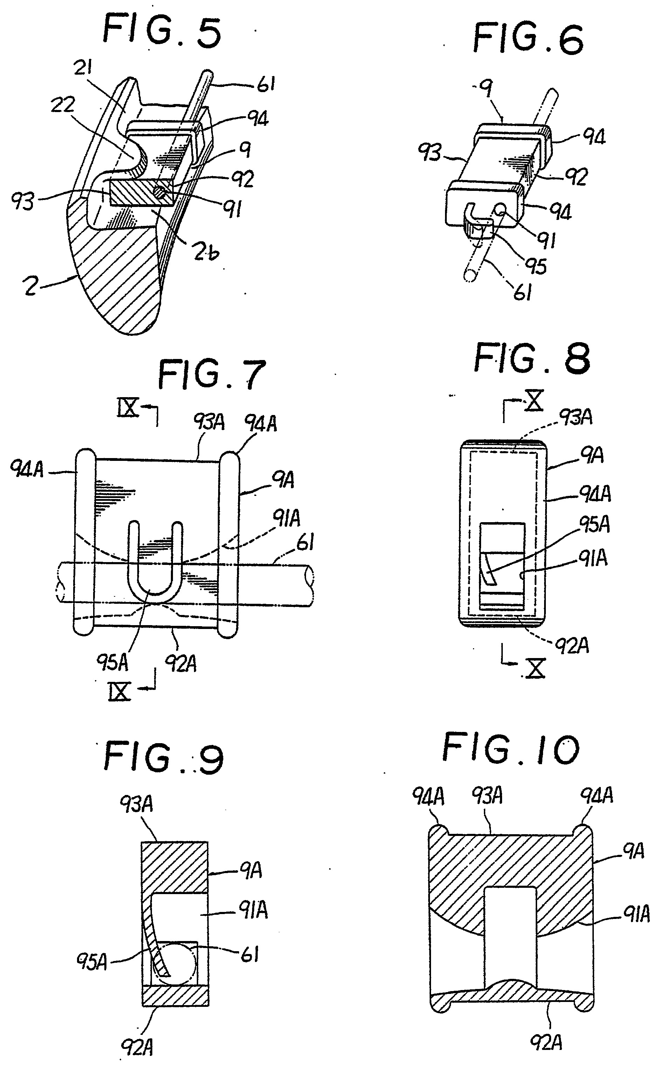

The spacer members 9, as seen from Fig. 6, each have a rectangular parallelepiped form with side surfaces 92 and 93.

The bore 91 is offset with respect to the centreline of the spacer towards the side surface 92 so that the distance between the side surface 92 and the bore 91 is smaller than that between the opposite side surface 93 and the bore 91.

Thus, the spacer members 9 can be inverted by turning around the bores 91 so as to change from a first position in which the side surfaces 92 contact the abutments 21 and 31 of the caliper arms 2 and 3 to a second position in which the side surfaces 93 contact the abutments 21 and 31; or vice versa, thereby enabling the spring reaction force of the caliper return spring 6 to be adjusted, being relatively weak at the first position and relatively strong at the second position. The return spring 6 shown in the drawing uses a single elastic wire whose centre portion is retained on the pivot shaft 1, and a pair of spring legs 61 extend from the centre and are coiled on the way respectively. When the spacer numbers 9 are in the first positions as shown in Figs. 1 through 3, the spring reaction force of the return spring 6 is, for example, about 800g of the minimum requirement value of a spring force when the caliper brake is used with a brake lever having a lever return spring. When the spacer numbers 9 are in the second positions as shown in Fig 4 and 5, the spring reaction force is greater, equal to a spring force required for a caliper brake to be used with a brake lever having no lever return spring.

The abutments 21 and 31 are formed on the brake-shoe-holding sides of the caliper arms 2 and 3 respectively and provided with lugs 22 and 32 opposite to the surfaces of the caliper arms 2 and 3 to define recesses for receiving the spacer members 9. Also, each spacer member 9, as shown in Fig. 6, is provided at each end with projecting portions or rims 94 engageable with the sides of the lugs 22 and 32 to locate the spacer members 9 from shifting with respect to each caliper arm 2 or 3.

The surfaces 2b and 3b of the caliper arms 2 and 3 opposite to the lugs 22 and 32 are inclined to a reference horizontal plane X as shown in Fig. 3, whereby the spacer members 9 are better secured between the lugs 22 and 32 and the surfaces 2b and 3b.

Each spacer member 9 is provided at one end face with an elastically deformable tongue 95 adjacent the bore 91, so that when the spring leg 61 is fitted in the bore, the tongue 95 is elastically deflected to contact with the surface of the spring leg 61, thereby frictionally resisting movement of the spacer member 9 on the spring leg, so to reduce inadvertent loss of the spacer member.

In the case where a caliper brake of the present invention constructed as above described is used with, for example, a brake lever provided with a lever return spring, the side surfaces 92 of the spacer members 9 are chosen for contact with the abutments 21 and 31 so that the spacer members 9 are disposed in the first positions where the restoring force of the return spring 6 is relatively weak. In this case, an operating force for the braking action can be less because of the relatively weak restoring force of the return spring 6, so that, even when the transmission efficiency of the control wire W lowers, a light or sensitive braking action is maintained with a good return feeling of the brake lever.

The spacer members 9 are held between the lugs 22 and 32 and the surfaces 2b and 3b opposite thereto and inclined with respect to the horizontal plane X parallel to the direction of restoration of the return spring 6, whereby although the restoring force of the return spring 6 is relatively weak, the spacer members 9 are reliably prevented from escaping from the abutments 21 and 31.

In the case where the caliper brake of the invention is used in combination with the more usual brake lever having no lever return spring, the spacer members 9 are released from contact with the abutments 21 and 31 and are inverted by rotation around the spring legs 61 without being removed therefrom, so that the side surfaces 93 are brought into contact with the abutments 21 and 31, thus the return spring 6 is adjusted or re-set so that the restoring force of the return spring 6 is greater with respect to the caliper arms 2 and 3. In this case, since the restoring force of the return spring 6 is greater, even when the transmission efficiency of the control wire W is deteriorated, the brake lever can reliably be returned to its brake-release position.

The spacer members 9 are simply inverted without being removed from the spring legs 61, thereby enabling the spring setting of the spring legs 61 to be adjusted easily.

Since the tongues 95 provided on the spacer members 9 contact with the surfaces of the spring legs 61 to give resistance against movement of the spacer members 9 with respect to the spring legs 61, when the setting of the spring legs 61 is changed the spacer members 9 can be prevented from escaping inadvertently from the spring legs 61.

The tongues 95 may, as shown in Figs. 7 through 10, be provided at intermediate portions of the spacer members 9. Thus, each inversion member 9A shown in Figs. 7 through 10 has a curved bore 91A as shown in Fig. 10 and at a lengthwise intermediate portion of the bore 91A is provided a tongue 95A for frictional contact with the spring leg 61 to be fitted into the bore 91A. In addition, each spacer member 9A of course has a side surface 92A and 93A projecting portions 94A corresponding with the parts having the same numeral references as previously described.

The return spring 6 may be replaced by separate return springs, one for each caliper arms 2, 3.

In the case where the caliper brake of the invention is used in combination with the usual brake lever having no lever return spring, the restoring force of the return spring 6 may be set relatively weak for a good transmission efficiency of the control wire W and the setting may be intensified when the transmission efficiency becomes impaired.

The present invention is applicable to a centre-pull type caliper brake and to a cantilever type caliper brake as well as the above-described side-pull type caliper brake.

**Claims**

1. A caliper brake for a bicycle, comprising a pivot shaft (1) adapted for fixing to a bicycle frame, a caliper having a set of caliper arms (2, 3) mounted on the pivot shaft (1), and a caliper return spring (6) having spring legs (61) for urging the caliper arms (2, 3) to open the caliper, each spring leg (61) acting on its associated caliper arm (2, 3) by way of a spacer member (9) mounted on its spring leg (61) by means of a bore (91) in the spacer (9); characterised in that each spacer member (9) has two mutually parallel contact faces (92, 93) disposed on opposite sides of the spacer (9), the bore (91) extends parallel with the faces (92, 93) and nearer to one of said faces than the other, and in that the spacer (9) is rotatable on the axis of the bore (91).

2. A caliper brake according to claim 1; characterised in that each caliper arm (2, 3) has a recess (2b, 21, 22) in which is located the associated spacer member (9), said recess being defined on one side by a surface part (2b) of the caliper arm (2) and on a side adjacent the one side by an abutment (21) and on a side opposite the one side by a lug (22).

3. A caliper brake according to claim 2, characterised in that each spacer member (9) is provided with mutually spaced projecting portion (94) disposed to lie on opposite sides of said lug (22) for location of the spacer member (9) in said recess (2b, 21, 22).

4. A caliper brake according to any one of the preceding claims; characterised in that each spacer member (9) includes a yieldably resilient tongue (95, 95A) which bears on the associated spring leg (16) and provides frictional resistance to shifting of the spacer member (9) with respect to its spring leg (16).

**Revendications**

1. Frein à compas pour bicyclette, comprenant un axe de pivot (1) prévu pour la fixation à un cadre de bicyclette, un compas comportant un jeu de bras de compas (2, 3) monté sur l'axe de pivot (1), et un ressort de rappel de compas (6) comportant des branches de ressort (61) pour rappeler les bras de compas (2, 3) en position d'ouverture du compas, chaque branche de ressort (61) agissant sur son bras de compas associé (2, 3) par l'intermédiaire d'une pièce d'espacement (9) montée sur sa branche de ressort (61) au moyen d'un trou (81) prévu dans la pièce d'espacement (9); caractérisé en ce que chaque pièce d'espacement (9) comporte deux faces de contact mutuellement parallèles (92, 93) situées sur des côtés opposés de la pièce d'espacement (9), le trou (91) est parallèle auxdites faces (92, 93) et plus près d'une des dites faces que de l'autre et en ce que la pièce d'espacement (9) peut tourner sur l'axe du trou (91).

2. Frein à compas suivant la revendication 1, caractérisé en ce que chaque bras de compas (2, 3) comporte un évidement (2b, 21, 22) dans lequel est logée la pièce d'espacement associée (9), ledit évidement étant défini sur un premier côté par une partie (2b) de la surface du bras de compas (2) et sur un côté adjacent au premier côté par une butée (21) et sur un côté opposé au premier côté par une patte (22).

3. Frein à compas suivant la revendication 2, caractérisé en ce que chaque pièce d'espacement (9) comporte des saillies mutuellement espacées (94) disposées de part et d'autre de ladite patte (22) pour le positionnement de la pièce d'espacement (9) dans ledit évidement (2b, 21, 22).

4. Frein à compas suivant l'une quelconque des revendications précédentes, caractérisé en ce que chaque pièce d'espacement (9) comprend une languette élastiquement déformable (95, 95A) qui appuie sur la branche de ressort associée et engendre une résistance de frottement au déplacement de la pièce d'espacement (9) par rapport à sa branche de ressort (16).

**Patentansprüche**

1. Felgenbremse für ein Fahrrad, aufweisend einen Drehzapfen (1), der zum Befestigen an einem Fahrradrahmen vorgesehen ist, eine Gabel, die einen Satz Gabelarme (2, 3) aufweist, der auf dem Drehzapfen (1) angebracht ist, und eine Gabelrückstellfeder (6) mit Federschenkeln (61) zum Zurückdrücken der Gabelarme (2, 3), um die Gabel zu öffnen, wobei jeder Federschenkel (61) auf seinem zugehörigen Gabelarm (2, 3) über ein Abstandshalterteil (9) wirkt, das auf seinem Federschenkel mittels einer Bohrung (91) in den Abstandshaltern (9) angebracht ist, dadurch gekennzeichnet, daß jedes Abstandshalterteil (9) zwei gegenseitige parallele Berührungsflächen (92, 93) aufweist, die auf entgegengesetzten Seiten des Abstandshalters (9) angebracht sind, die Bohrung (91) parallel mit den Flächen (92, 93) und näher an der einen Fläche als der anderen verläuft, und daß der Abstandshalter (9) verschwenkbar auf der Achse der Bohrung (91) ist.

2. Felgenbremse nach Anspruch 1, dadurch gekennzeichnet, daß jeder Gabelarm (2, 3) eine Aussparung (2b, 21, 22) aufweist, in der das zugehörige Abstandshalterteil (9) placiert ist, wobei die Aussparung auf einer Seite durch einen Flächenteil (2b) des Gabelarmes (2) und auf einer Seite in der Nähe der einen Seite durch ein Widerlager (21) und auf einer Seite entgegengesetzt der einen Seite durch einen Vorsprung (22) begrenzt wird.

3. Felgenbremse nach Anspruch 2, dadurch gekennzeichnet, daß jedes Abstandshalterteil (9) mit gegenseitig beabstandeten Vorsprungsabschnitten (94) versehen ist, die vorgesehen sind, an entgegengesetzten Seiten des Vorsprunges (22) zum Placieren des Abstandshalterteils (9) in der Aussparung (2b, 21, 22) zu liegen.

4. Felgenbremse nach irgendeinem der vorangegangenen Ansprüche, dadurch gekennzeichnet, daß jedes Abstandshalterteil (9) eine eingelassene Federzunge (95, 95A) einschließt, die sich auf dem zugehörigen Federschenkel (13) abstützt und Reibungswiderstand zum Anheben des Abstandshalterteils (9) in bezug auf dessen Federschenkel (16) erzeugt.

# FIG. 1

W
0
8
3a
3
1
6
2
61
91
21
92
III
4
2b
9
94
22
93
95 94
9
94
32
93
94
III
A
61
91
92
31
3b
95
7
4
5

# FIG. 3

21 92 91 22 9
61
2b
94
93
X
2

# FIG. 2

21
22
61
94
9
91
92
93
2b
2

# FIG. 4

3a
1
6
9
61
21
94
93
91
22
2
95
92
9
94
91
32
92 94
93
7
31
3
95
4
5

EP 0 260 819 B1

FIG. 5

FIG. 6

FIG. 7

FIG. 8

FIG. 9

FIG. 10